(19) Europäisches Patentamt
European Patent Office
Office européen des brevets

(11) EP 2 444 533 A2

(12) # EUROPEAN PATENT APPLICATION
published in accordance with Art. 153(4) EPC

(43) Date of publication:
**25.04.2012 Bulletin 2012/17**

(21) Application number: **10789700.1**

(22) Date of filing: **15.06.2010**

(51) Int Cl.:
***D01F 6/62*** *(2006.01)* ***D03D 1/02*** *(2006.01)*
***D06M 11/77*** *(2006.01)*

(86) International application number:
**PCT/KR2010/003850**

(87) International publication number:
**WO 2010/147373 (23.12.2010 Gazette 2010/51)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.06.2009 KR 20090052716**
**16.06.2009 KR 20090053238**
**19.06.2009 KR 20090054926**

(71) Applicant: **Kolon Industries, Inc.**
**Kyungki-do 427-709 (KR)**

(72) Inventors:
- **LEE, Young-Soo**
**Gumi-si**
**Gyeongsangbuk-do 730-030 (KR)**
- **KIM, Young- Jo**
**Gimpo-si**
**Gyeonggi-do 415-060 (KR)**
- **KIM, Gi-Woong**
**Daegu 706-010 (KR)**
- **KIM, Jae-Hyung**
**Gumi-si**
**Gyeongsangbuk-do 730-796 (KR)**
- **LEE, Sang-Mok**
**Gumi-si**
**Gyeongsangbuk-do 730-020 (KR)**

(74) Representative: **TER MEER - STEINMEISTER & PARTNER GbR**
**Mauerkircherstraße 45**
**DE-81679 München (DE)**

(54) **POLYESTER THREAD FOR AN AIR BAG AND PREPARATION METHOD THEREOF**

(57) The present invention relates to a polyester fiber that can be applied to a fabric for an airbag, and particularly, to a polyester fiber having a crystallinity of 43% to 55%, an amorphous orientation factor (AOF) of 0.2 to 0.8, and a long period of 140 to 180 A, a method of preparing the same, and a fabric for an airbag prepared therefrom.

Since the polyester fiber of the present invention remarkably secures high strength and high elongation, it is possible to provide superior packing properties, dimensional stability, and gas barrier effect, and to protect occupants safely by minimizing the impact applied to the occupants, when it is used for the fabric for an airbag.

FIG. 2

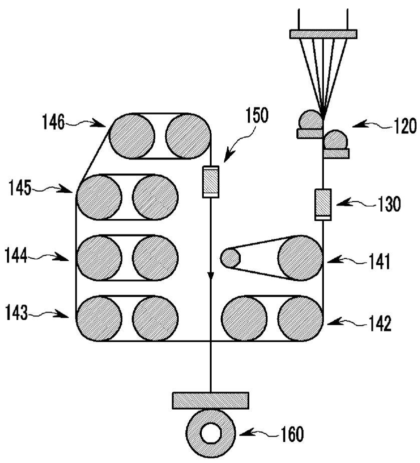


EP 2 444 533 A2

## Description

## CROSS REFERENCES TO RELATED APPLICATION

This application claims priority to and the benefit of Korean Patent Application No. 10-2009-0052716 filed in the Korean Industrial Property Office on June 15, 2009, No. 10-2009-0053238 filed in the Korean Industrial Property Office on June 16, 2009, and No. 10-2009-0054926 filed in the Korean Industrial Property Office on June 19, 2009, which are hereby incorporated by reference for all purposes as if fully set forth herein.

## BACKGROUND OF THE INVENTION

### (a) Field of the Invention

The present invention relates to a polyester fiber that can be applied to a fabric for an airbag, and particularly to a high strength and low modulus polyester fiber having superior mechanical properties, dimensional stability, packing properties, and the like, a method of preparing the same, and a fabric for an airbag using the same.

### (b) Description of the Related Art

Generally, an airbag is an apparatus for protecting a driver and passengers by providing a gas into the airbag by exploding gunpowder so as to inflate the airbag after detecting a crash impact with an impact detecting sensor, when a driving car collides at a speed of about 40 km/h or more, and a structure of a conventional airbag system is depicted in Fig. 1.

As depicted in Fig. 1, conventional airbag system includes: an inflator **121** that generates a gas by ignition of a detonator **122;** an airbag module **100** installed in a steering wheel **101** and including an airbag **124** that is expanded and unfolded toward a driver on the driver's seat by the generated gas; an impact sensor **130** that gives an impact signal when the car has crashed; and an electronic control module (ECM) **110** that ignites the detonator **122** of the inflator **121** according to the impact signal. In the airbag system, the impact sensor **130** detects the impact and sends the signal to the ECM when the car collides. At this time, the ECM **110** that received the signal ignites the detonator **122** and a gas generator in the inflator **121** is combusted. The combusted gas generator generates the gas rapidly and expands the airbag **124.** The expanded airbag **124** contacts the front upper body of the driver and partially absorbs the impact load caused by the collision, and when the driver's head and chest go forward according to the law of inertia and smash against the airbag **124,** it further absorbs the shock toward the driver by rapidly discharging the gas from the airbag through discharging holes formed on the airbag. Therefore, the airbag effectively absorbs the shock that is delivered to the driver, and can reduce secondary injuries at the time of a collision.

As disclosed above, an airbag for a car is prepared in a certain shape and is installed in the steering wheel, door roof rails, or side pillars of the car in a folded form so as to minimize its volume, and it is expanded and unfolded when the inflator **121** operates.

Therefore, it is very important that the airbag has folding properties and flexibility for reducing the shock to the occupant in addition to good mechanical properties of the fabric for maintaining the folding and packaging properties of the airbag effectively when it is installed in a car, preventing damage to and rupture of the airbag itself, providing good unfolding properties of the airbag cushion, and minimizing the impact provided to the occupant. However, an airbag fabric that can maintain superior air-tightness and flexibility for the occupant's safety, sufficiently endure the impact applied to the airbag, and be effectively installed in a car has not yet been suggested.

Previously, a polyamide fiber such as nylon 66 has been used as the raw material of the fiber for an airbag. However, nylon 66 has superior impact resistance but is inferior to polyester fiber in humid heat resistance, light resistance, and dimensional stability, and is expensive.

Meanwhile, Japanese patent publication No. Hei 04-214437 suggested a polyester fiber for reducing such defects. However, when the airbag was prepared by using a prior polyester fiber, it was difficult to install in a narrow space in a car because of its high stiffness, excessive heat shrinkage may be generated by high temperature heat treatment because of its high elasticity and low elongation, and there was a limitation for maintaining sufficient mechanical and unfolding properties in severe conditions of high temperature and high humidity.

Therefore, it is needed to develop a fiber that maintains superior dimensional stability, mechanical properties, and gas barrier effect so as to be used for an airbag fabric, and also maintains flexibility for reducing the impact applied to passengers, the packing properties, and superior properties in the severe conditions of high temperature and high humidity.

## SUMMARY OF THE INVENTION

It is an aspect of the present invention to provide a polyester fiber for an airbag that secures superior dimensional stability, mechanical properties, flexibility, and packing properties in order to be used for an airbag fabric, and that maintains sufficient performance in severe conditions of high temperature and high humidity.

It is another aspect of the present invention to provide a method of preparing the polyester fiber.

It is still another aspect of the present invention to provide a fabric for an airbag prepared by using the polyester fiber.

The present invention provides a polyester fiber for an airbag, having a crystallinity of 43% to 55%, an amorphous orientation factor (AOF) of 0.2 to 0.8, and a long period of 140 to 180 Å.

The present invention also provides a method for preparing the polyester fiber, including the steps of melt-spinning a polyester polymer comprising 70 mol% of more of poly(ethylene terephthalate) and having intrinsic viscosity of 0.8 dl/g or more at 270 to 300 °C to prepare a polyester undrawn yarn, and drawing the polyester undrawn yarn.

The present invention further provides a fabric for an airbag prepared by using the polyester fiber.

## BRIEF DESCRIPTION OF THE DRAWINGS

Fig. 1 is a drawing showing a conventional airbag system.
Fig. 2 is a schematic flow diagram showing a process of preparing a polyester fiber for an airbag according to one embodiment of the present invention.

## DETAILED DESCRIPTION OF THE EMBODIMENTS

Hereinafter, the polyester fiber for an airbag according to embodiments of the present invention, the method of preparing the same, and the fabric for an airbag prepared by using the same are explained in more detail. However, the following is only for understanding of the present invention and the scope of the present invention is not limited to or by them, and it is obvious to a person skilled in the related art that the embodiments can be variously modified in the scope of the present invention.

In addition, "include" or "comprise" means to include any components (or ingredients) without particular limitation unless there is no particular mention about them in this description, and it cannot be interpreted as a meaning of excluding an addition of other components (or ingredients).

After preparing a drawn yarn by melt-spinning a polymer including poly(ethylene terephthalate) (PET) so as to prepare an undrawn yarn and drawing the same, the polyester fabric for an airbag may be prepared by weaving the obtained polyester fibers. Therefore, the characteristics of the polyester fiber are directly/indirectly reflected in the polyester fabric for an airbag.

Particularly, in order to apply the polyester to the fiber for an airbag instead of a prior polyamide such as nylon 66, the disadvantages of the prior polyester fibers such as a low folding property according to its high stiffness and low elongation, a falling off properties in severe conditions of high temperature and high humidity according to its low melt heat capacity, and a decline in unfolding performance according the same must can be overcome.

Polyester has a stiffer structure than that of nylons in terms of molecular structure, and thus the characteristics of high modulus and low elongation. Therefore, excessive heat shrinkage may be generated when heat treated at high temperature during a manufacturing process into fabric for an airbag. The packing property also deteriorates remarkably when it is used for fabric for an airbag and installed in a car. Furthermore, carboxyl end groups (hereinafter "CEG") in the polyester molecular chain attack ester bonds in a condition of high temperature and high humidity and cut the chain, and it becomes a cause of deterioration of the properties after aging.

Accordingly, the polyester fiber of the present invention can be effectively applied to the fabric for an airbag, because the mechanical properties such as toughness and gas barrier performance of the fabric can be maintained while the stiffness is remarkably lowered by optimizing the range of the properties of the polyester fiber, for example, crystallinity, amorphous orientation factor (AOF), long period, and the like.

Particularly, it is revealed from the results of the present inventor's experiments that a fabric for an airbag shows more improved folding properties, dimensional stability, and gas barrier effect by preparing the fabric for an airbag from the polyester fiber having above characteristics. The fabric for an airbag can maintain superior packing properties, superior mechanical properties, air-leakage protection, insulating properties, air-tightness, and the like, even under severe conditions of high temperature and high humidity.

According to one embodiment of the present invention, a polyester fiber having specific characteristics is provided. The polyester fiber may show a crystallinity of 43% to 55%, an amorphous orientation factor (AOF) of 0.2 to

0.8, and a long period of 140 to 180 Å.

It is preferable that the polyester fiber includes PET as a main component. Various additives may be included in the PET during the preparing steps thereof, and thus the fiber may include the PET in the content of 70 mol% or more, and preferably of 90 mol% or more, in order to show the properties suitable for the fabric for an airbag. Hereinafter, the term PET means a polymer including PET in the content of 70 mol% or more unless any special explanation is given.

The polyester fiber according to one embodiment of the present invention may be prepared under melt-spinning and drawing conditions that will be mentioned later, and the fiber shows a crystallinity of 43% to 55%, an amorphous orientation factor (AOF) of 0.2 to 0.8, and a long period of 140 to 180 Å.

The PET polymer constituting the undrawn yarn basically has a partly crystallized form, and thus, it consists of a crystalline region and an amorphous region. However, the polyester fiber obtained under controlled melt-spinning and drawing conditions exhibits higher crystallinity than the existing PET fiber (commonly crystallized to less than 7%), specifically crystallinity of 43% to 55%, preferably 43% to 53%, more preferably 44% to 52%, due to oriented crystallization. Due to the optimized crystallinity, fabric for an airbag manufactured from the polyester fiber may simultaneously exhibit high mechanical properties and high elongation property. If the crystallinity of the yarn is too low, for example less than 43%, when applied to fabric for an airbag, it may be difficult to maintain mechanical properties such as sufficient shrinkage stress and toughness, and the like. To the contrary, if the crystallinity of the yarn is too high, for example exceeding 55%, strength may be excessively increased and thus processibility and flexibility may be decreased, and due to excessive increase in stiffness, fabric for an airbag obtained therefrom may have significantly deteriorated folding performance, flexibility, packing, and the like, thus making practical use or commercialization difficult.

Further, the polyester fiber exhibits lower amorphous orientation factor than the existing PET yarn, specifically amorphous orientation factor of 0.2 to 0.8, preferably 0.25 to 0.78, more preferably 0.3 to 0.76. The amorphous orientation factor refers to the orientation degree of chains included in the amorphous region in undrawn yarn, and it decreases as tangling of chains in the amorphous region increases. In general, if the amorphous orientation factor is lowered, the degree of disorder may increase and chains in the amorphous region may have a relaxed structure instead of tensed, and thus, fabric for an airbag manufactured from the polyester fiber may exhibit low shrinkage and low shrinkage stress. Particularly, if the amorphous orientation factor is low, a region occupied by chains may increase to lower compactness between molecules, and thus elongation may be increased and modulus may be lowered. Namely, low stiffness and high elongation may be provided, and simultaneously, sufficient mechanical properties and high strength properties such as impact resistance, toughness, and the like may be provided to fabric for an airbag.

Particularly, if the polyester fiber has too high amorphous orientation factor, for example exceeding 0.8, preferably exceeding 0.78, more preferably exceeding 0.76, chains included in the amorphous region in a molecule may be largely oriented to fiber axis, and thus, the fabric may be stiff and have low toughness, and folding performance and tensile, tear properties may be deteriorated. To the contrary, if the amorphous orientation factor is too low, for example less than 0.2, preferably less than 0.25, more preferably less than 0.3, the orientation degree of chains included in the amorphous region in a molecule may be too low and yarn strength may be lowered, and thus basic requirement properties for fabric for an airbag may not be satisfied. Therefore, the polyester fiber of the preset invention has amorphous orientation factor of 0.2 to 0.8, preferably 0.25 to 0.78, more preferably 0.3 to 0.76, and thus, when applied for fabric for an airbag, basic essential properties may be satisfied and more preferable folding performance and packing may be obtained.

Further, the polyester fiber of the present invention exhibits a lower long period than the existing PET yarn, for example a long period of 140 Å to 180 A, preferably 145 Å to 175 Å, more preferably 150 Å to 170 Å. The long period represents the length of a crystalline region and an amorphous region in yarn, and it is higher as the yarn exhibits high strength and high modulus properties. In general, if the long period is lowered, the orientation degree of the amorphous region may be lowered, and thus the yarn may have lowered modulus, increased elongation at break, and thus increased toughness, and thereby, fabric for an airbag manufactured from the polyester fiber may exhibit excellent folding performance, flexibility, packing and impact resistance. However, if the long period of the yarn is for example, less than 140 Å, physical property of the yarn, i.e., strength may be lowered and thus it may be difficult to satisfy basic properties such as tensile, tear properties, and the like, when applied for fabric for an airbag.

Therefore, using the polyester fiber exhibiting the optimized ranges of high crystallinity, low amorphous orientation factor, and a long period of 140 to 180 Å, fabric for an airbag simultaneously exhibiting high strength and high elongation may be manufactured. Thus, the fabric for an airbag showing superior impact resistance, dimensional stability, mechanical properties, and air-tightness in addition to lower stiffness and superior folding, flexibility, and packing properties can be obtained by using the polyester fiber. Such a fabric can be preferably applied to an airbag, because the fabric provides good folding and packing properties when it is installed in a narrow space in a car, while showing superior mechanical properties, dimensional stability, and gas barrier effect. Also, the fabric for an airbag can protect an occupant safely by minimizing the shock applied to the occupant with its superior flexibility.

The polyester fiber may exhibit more improved intrinsic viscosity than the existing polyester fiber, specifically intrinsic viscosity of 0.7 dl/g or more, or 0.7 dl/g to 1.5 dl/g, preferably 0.8 dl/g to 1.4 dl/g, more preferably 1.0 dl/g to 1.3

dl/g, still more preferably 1.05 dl/g to 1.25 dl/g. When the polyester fiber is applied for fabric for an airbag, the intrinsic viscosity may be preferably secured within the above range so as not to generate thermal deformation during a coating process, and the like. If the yarn has intrinsic viscosity of 0.7 dl/g, shrinkage stress may be secured such that deflection of the yarn may be prevented. And, a maximum value of intrinsic viscosity may be determined within a range capable of embodying low shrinkage property so as to prevent deformation by heat treatment, and for example, 1.5 dl/g or less is preferable. Particularly, the polyester fiber of the present invention maintains intrinsic viscosity to such a high degree, thereby providing low stiffness with low drawing and simultaneously providing sufficient mechanical property, and high strength properties such as impact resistance, toughness, and the like to fabric for an airbag.

Furthermore, the polyester fiber of the present invention may show largely lessened CEG content in comparison with the prior known polyester fibers, because it is prepared under the melt-spinning and drawing conditions that will be mentioned later. The CEG content of the polyester fiber of the present invention may be 30 meq/kg or less, preferably 25 meq/kg or less, and more preferably 20 meq/kg or less. The CEG in the polyester molecular chain attacks ester bonds in the conditions of high temperature and high humidity and cuts the chain, and it deteriorates the properties of the fiber after aging. Particularly, when the fiber having a CEG content of more than 30 meq/kg is applied to an airbag, it is caused to produce the acids largely and cut the polymer chains of the fiber in the conditions of high humidity and the properties deteriorate. Therefore, it is preferable that the CEG content of the polyester fiber is 50 meq/kg or less.

The polyester fiber may have diethyleneglycol (DEG) content of 1.1 wt% or less, preferably 1.0 wt% or less, more preferably 0.9 wt% or less. If the DEG content exceeds 1.1 wt%, thermal stability may be decreased to cause heat resistance problem when the airbag is developed, and thus, the polyester fiber for an airbag of the present invention may preferably comprise DEG content of 1.1 wt% or less.

The polyester fiber may have birefringence of 0.1 to 0.35, preferably 0.13 to 0.25. Thereby, the properties of high crystallinity and low amorphous orientation factor of the polyester fiber may become more excellent, and thus, fabric for an airbag having more excellent physical properties such as high strength and high elongation, and the like may be obtained. If birefringence is less than 0.1, the orientation degree of a crystalline region and an amorphous region may be too lowered, and thus, required basic physical properties (tensile/tear) of fabric for an airbag may not be satisfied, and if birefringence exceeds 0.35, fabric may become too stiff, thus decreasing packing.

Meanwhile, the polyester fiber according to one embodiment of the present invention may show tensile tenacity of 6.5 g/d to 11.0 g/d, and preferably 7.5 g/d to 10.0 g/d, and elongation at break of 13% to 35%, and preferably 15% to 25%. Furthermore, the dry heat shrinkage of the fiber may be 1% to 7%, preferably 1.3% to 6.8%, and more preferably 1.5% to 6.5%, and the toughness of the fiber may be $27\times10^{-1}$ g/d to $46\times10^{-1}$ g/d, preferably $29\times 10^{-1}$ g/d to $46\times I0^{-l}$ g/d, and more preferably $31\times10^{-1}$ g/d to $42\times10^{-1}$ g/d. As disclosed above, when the polyester fiber of the present invention is applied to the fabric for an airbag, the fiber exhibits superior performance as well as superior tenacity and other properties by securing the crystallinity, the amorphous orientation factor, and the long period in the optimized range.

Furthermore, the shrinkage force of the polyester fiber of the present invention is preferably 0.005 to 0.075 g/d at a temperature of 150 °C corresponding to the laminate coating temperature of common coated fabrics, and also preferably 0.005 to 0.075 g/d at a temperature of 200 °C corresponding to the sol coating temperature of common coated fabrics. That is, it is possible to prevent the fabric from sagging due to heat during the coating process when the shrinkage forcees at 150°C and 200 °C are respectively 0.005 g/d or more. It is also possible to decrease the relaxing stress during the cooling process at room temperature after the coating process when the shrinkage forcees at a temperature of 150°C and 200 °C are respectively 0.075 g/d or less. The shrinkage force is based on a value measured under a fixed load of 0.10 g/d.

The polyester fiber may preferably have sing yarn fineness of 2 de to 10.5 de, and to secure required physical properties as yarn for an airbag, it may have tensile strength, elongation at break, and the like within specific ranges as explained above.

Since the polyester fiber used as fabric for an airbag of the present invention should maintain low fineness and high strength, the total fineless of the applicable yarn may be 200 to 1,000 denier, preferably 220 to 840 denier, and more preferably 250 to 600 denier. Furthermore, the yarn may give soft feel as the filament number is larger, but, if the filament number is too large, spinning performance may not be good, and thus, the filament number may be 50 to 240, preferably 55 to 220, more preferably 60 to 200.

Meanwhile, the polyester fiber according to one embodiment of the invention may be manufactured by melt-spinning PET to prepare undrawn yarn, and drawing the undrawn yarn, and as explained above, specific conditions or progression method of each process may be directly/indirectly reflected on the properties of the polyester fiber, to manufacture polyester fiber having the above explained properties.

Particularly, it was found that polyester fiber for an airbag having crystallinity of 43% to 55%, amorphous orientation factor (AOF) of 0.2 to 0.8, and a long period of 140 to 180 Å may be secured through the process optimization. And, it was found that through the optimization of the melt-spinning and drawing processes, carboxyl end groups (CEG) that exists as acid under high moisture condition to induce basic molecular chain cutting of the yarn may be minimized. Therefore, the polyester fiber may simultaneously exhibit high strength and high elongation properties, and thus, may

be preferably applied for fabric for an airbag having excellent mechanical properties, packing, dimensional stability, and gas barrier effect.

Each step of the manufacturing method of the polyester fiber will be explained in detail.

The manufacturing method of the polyester fiber for an airbag comprises melt-spinning a polyester polymer comprising 70 mol% of more of poly(ethylene terephthalate) and having intrinsic viscosity of 0.8 dl/g or more at 270 to 300 °C to prepare a polyester undrawn yarn; and drawing the polyester undrawn yarn.

The manufacturing method of the polyester fiber for an airbag may further comprise preparing the polyester polymer through esterification of dicarboxylic acid and glycol or transesterification of a dialkylester compound of dicarboxylic acid and glycol.

According to the present invention, polycondensation and solid state polymerization process conditions for preparing polyester polymer may be optimized so as to maintain excellent properties even under sever conditions of high temperature high moisture when applied for fabric for an airbag. Particularly, the polyester polymer may be prepared by polymerization of dicarboxylic acid and glycol (hereinafter referred to as 'TPA' process) or polymerization of dialkylester of dicarboxylic acid and glycol (hereinafter, referred to as 'DMT' process), and each polymerization process may be optimized to minimize production of carboxyl end group (CEG).

First, the method for preparing the polyester polymer through esterification of dicarboxylic acid and diol may comprise the steps of a) conducting esterification of dicarboyxlic acid and glycol, b) conducting polycondensation of the oligomer produced by the esterification, and c) conducting solid state polymerization of the polymer produced by the polycondensation.

In the preparation process of the polyester polymer, the polycondensation reaction and the solid sate polymerization reaction are conducted under mild condition of lower temperature than the existing process, thereby securing excellent mechanical properties even after aging for a long time under sever conditions of high temperature high moisture. More specifically, the polycondensation reaction may be conducted at a temperature range of from 245 to 295 °C, and then, the solid state polymerization may be conducted at a temperature range of from 200 to 240 °C, thereby controlling viscosity of low temperature polymerized and melt-polymerized polymer low, to comparatively minimize a time of exposure to high temperature. Namely, through the viscosity control of the low temperature polymerized and melt-polymerized polymer, production of carboxylic end group (CEG) at polymer end and diethyleneglycol (DEG) content may be minimized, and, in the solid state polymerization step, carboxylic acid group at polymer end and hydroxyl group may be bonded to further minimize CEG content and increase molecular weight of the polymer. By using the above prepared polymer with high viscosity, the present invention may manufacture high strength high elongation polyester fiber that can be applied for airbag fabric.

In the present method, the dicarboxylic acid may be at least one selected from the group consisting of an aromatic dicarboxylic acid having 6 to 24 carbon atoms ($C_{6-24}$), a cycloaliphatic dicarboxylic acid having 6 to 24 carbon atoms ($C_{6-24}$), an alkane dicarboxylic acid having 2 to 8 carbon atoms ($C_{2-8}$), and ester-forming derivatives thereof. More particularly, the dicarboxylic acid or the ester-forming derivative that can be used for preparing the present polyester fiber may be a $C_{6-24}$ aromatic dicarboxylic acid such as terephthalic acid, isophthalic acid, biphenyl dicarboxylic acid, 1,4-naphthalene dicarboxylic acid, 1,5-naphthalene dicarboxylic acid, and the like, and ester-forming derivatives thereof, a $C_{6}$-$_{24}$ cycloaliphatic dicarboxylic acid such as 1,4-cyclohexane dicarboxylic acid and the like, and a $C_{2}$-$_{8}$ alkane dicarboxylic acid, and the like.

Among these, terephthalic acid is preferably used when considering economics and the properties of the complete product, and particularly the dicarboxylic acid including terephthalate at 70 mol% or more is preferably used when one or more compounds are used as the dicarboxylic acid.

Furthermore, the glycol that can be used in the present invention may be at least one selected from the group consisting of a $C_{2-8}$ alkane diol, a $C_{6-24}$ cycloaliphatic diol, a $C_{6-24}$ aromatic diol, and an ethylene oxide or propylene oxide adduct thereof. More particularly, the glycol that can be used for preparing the present polyester may be a $C_{2-8}$ alkane diol such as ethylene glycol, 1,2-propane diol, 1,3-propane diol, 1,3-butane diol, 1,4-butane diol, 1,5-pentane diol, 1,6-hexane diol, and the like, a $C_{6-24}$ cycloaliphatic diol such as 1,4-cyclohexane diol, 1,4-cyclohexane dimethanol, and the like, a $C_{6-24}$ aromatic diol such as bisphenol A, bisphenol S, and the like, and an ethylene oxide or propylene oxide adduct of the aromatic diol, and the like.

As disclosed above, the present method of preparing the polyester polymer can be the application of a terephthalic acid (TPA) method that includes esterification of a dicarboxylic acid and a glycol having two OH groups. A polyester TPA method in general is a direct reaction of the dicarboxylic acid and the glycol, and is a self acid-catalyzed reaction without using other catalysts in the esterification reaction. For example, poly(ethylene terephthalate) (PET) is directly prepared by the esterification reaction of terephthalic acid and ethylene glycol, as shown in the following Reaction Formula 1.

[Reaction Formula 1]

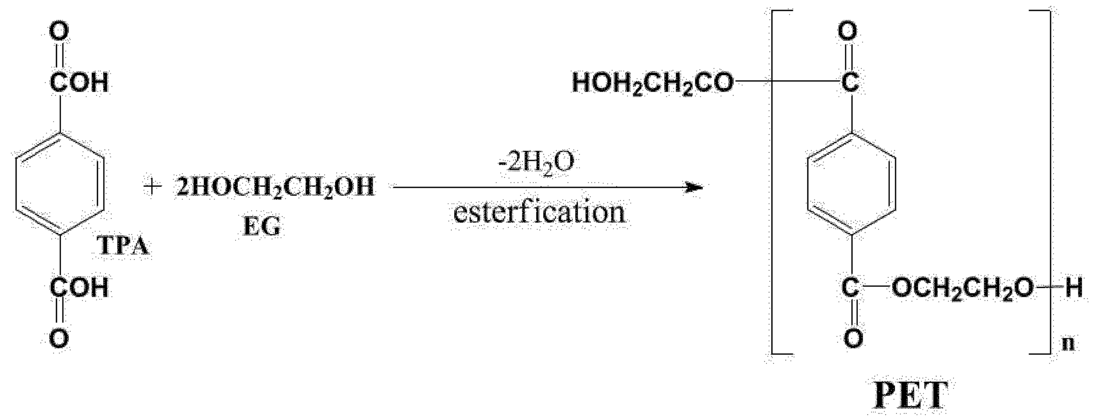


In such a TPA reaction, it is needed to maintain a high temperature because of the insolubility and low reactivity of the dicarboxylic acid. The oligomer prepared by the above method can be polymerized into a polymer having a specific viscosity by carrying out a polycondensation reaction at a high temperature while adding a catalyst under a high vacuum condition. The prepared polymer is discharged through a nozzle by using a gear pump or a high pressure inert gas ($N_2$). The discharged polymer is solidified in cooling water and cut into an adequate size.

However, the final polyester polymer prepared by the conventional TPA method has plenty of CEG, because the dicarboxylic acid having CEGs is used as the raw material and the esterification and polycondensation reactions at a high temperature cause thermal degradation and generate CEG in the molecules. Furthermore, when the polyester fiber having plenty of CEG is used for the fabric for an airbag, the CEG that exists as an acid under the high temperature and high humidity conditions may cause the scission of the molecular chain and deteriorate the properties of the fabric, as disclosed above.

Therefore, the present invention can minimize the CEG content by carrying out the polycondensation reaction of the dicarboxylic acid and the glycol and the solid state polymerization in a low temperature polymerization under the mild conditions. Furthermore, the present invention can increase the molecular weight of the polymer through the additional solid state polymerization, simultaneously with forming the bonds of the carboxyl end group and the hydroxyl group to decrease CEG contents.

The esterification reaction of the dicarboxylic acid and the glycol in said step a) may be carried out according to a conventional method known as the TPA method, and it is not limited particularly to special processing conditions.

However, the mole ratio of the dicarboxylic acid and the glycol may be 1:1 to 1:5, preferably 1:1.1 to 1:1.45, and more preferably 1:1.1 to 1:1.4 according to preferable embodiment of the present invention. It is preferable to maintain the mole ratio of the reactants in the range in the aspects of considering the reaction time and the CEG and DEG contents of the polymer.

The esterification reaction of said step a) may be carried out at a temperature of 230 to 295 °C, and preferably of 250 to 290 °C, and the reaction time thereof may be 2 to 5 hours, and preferably 3 to 4 hours. The reaction time and the reaction temperature for the esterification may be controlled in the aspects of considering the reaction time and the ring numbers of the olygomer.

Furthermore, the polycondensation reaction of said step b) may be carried out at a temperature of 245 to 295 °C, and preferably of 250 to 290 °C, under a pressure of 2 Torr or less, and preferably 1 Torr or less. The reaction time of the polycondensation reaction may be 2 to 5 hours, and preferably 3 to 4 hours. The reaction time and the reaction temperature for the polycondensation may be controlled in the aspects of considering the reaction time, the CEG and DEG contents of the polymer, and the viscosity of the final melt-polymerized polymer.

Particularly, the polycondensation reaction of said step b) may control the viscosity of melt-polymerized polymer through the low temperature polymerization. It may be preferable to control the intrinsic viscosity of the polymer produced after polycondensation to 0.25 to 0.65 dl/g, more preferably 0.4 to 0.6 dl/g, for minimizing the carboxyl end groups of the polymer.

The polymer produced after the polycondensation reaction of said step b) may be cut to minimize the chip size, namely, to increase the specific surface area of the chip, which is to minimize internal/external reaction difference and increase reaction speed in the next solid state polymerization. Preferably, to increase specific surface area, the polymer produced after the polycondensation reaction of said step b) may be cut to a size of 1.0 g/100ea to 3.0 g/100ea, more preferably 1.5 g/100ea to 2.5 g/100ea, and the solid state polymerization may be performed.

The solid state polymerization of said step c) may be conducted at a temperature of 200 to 240 °C, preferably 220 to 235 °C, and under the pressure of 2 Torr or less, preferably 1 Torr or less. The reaction time may be 10 hours or more, preferably 15 hours or more, and the reaction time and the reaction temperature may be controlled in the aspects of considering the viscosity and the CEG content of the final polymerized chip.

The present invention conducts the polycondensation reaction of said step b) of the melt-polymerized polymer as low temperature polymerization under mild conditions, and further progresses the solid state polymerization, thereby forming the bonds of the carboxyl end groups (CEG) and hydroxyl groups to decrease the CEG contents and increase the molecular weight of the polymer.

Preferably, the polyester chip produced by conducting the solid state polymerization of said step c) may have intrinsic viscosity of 0.7 to 1.3 dl/g, more preferably 0.85 to 1.2 dl/g, in the aspects of improving the spinning performance and the properties of the yarn. The intrinsic viscosity of the polyester chip may be 0.7 dl/g or more to prepare yarn having high strength and high elongation properties. Also, it may be 1.3 dl/g or less to prevent the increase of the pressure in a spin pack and the cut of the molecular chain due to increase in the melting temperature of the chip.

The method for preparing the polyester polymer through the esterification of dicarboxylic acid and glycol may comprise further the steps of a') conducting the transesterification of the dialkyl ester compound of dicarboxylic acid and glycol, b') conducting the polycondensation of the oligomer produced by the transesterfication, and c') conducting the solid state polymerization of the polymer produced by the polycondensation.

If the polymerization is conducted by using the dialkyl ester compound of dicarboxylic acid, that is, the dialkyl ester compound that the acidic group of dicarboxylic acid is substituted with a C1-C8 alkyl ether group, the reaction can begin while remarkably reducing carboxyl group included in raw material, compared to that of the existing method by using a dicarboxylic acid. Therefore, the content of carboxyl end group (CEG) generated by thermal decomposition may be further decreased. The dialkyl ester of dicarboxylic acid may include those where dicarboxylic acid is substituted with an ether group including a C1-C8 alkyl group. The kind of dicarboxylic acid that can be used in the present invention is as explained for a TAP process. Particularly, the dialkyl ester compound of dicarboxylic acid that can be used for preparing the polyester fiber of the present invention may include dimethyl terephthalate, dimethyl dicarboxylate, and the like, but not limited thereto.

Among them, in view of improving the economical efficiency and the properties of the final product, the dialkyl ester compound of dicarboxylic acid may comprise 70 mol% or more of the carboxyl units. Particularly, if at least two kinds of the dialkyl ester compounds of dicarboxylic acid are used, it may be preferable to comprise 70 mol% or more of dialkylterephthalate.

Meanwhile, the kind of glycol that can be used in the present invention is as explained in the TPA process.

As explained, the polyester polymer may be prepared by applying a DMT (dimethylterephthalate) method wherein dialkylester of dicarboxylic acid and divalent alcohol, glycol are reacted to conduct transesterification. In general, a polyester DMT method is a reaction for obtaining polyester by two step processes wherein dialkylester of dicarboxylic acid and glycol are reacted to conduct transesterification, and then, polycondensation is conducted. For example, as shown in the following Equation Formula 2, poly(ethylene terephthalate) (PET) may be prepared by two step processes wherein low polymer BHET(bis-β-hydroxyethyl terephthalate) is obtained by the transesterification of dimethylterephthalate (DMT) and ethyleneglycol (EG), and then, the obtained BHT is subjected to polycondensation under vacuum, high temperature to obtain PET.

[Reaction Formula 2]

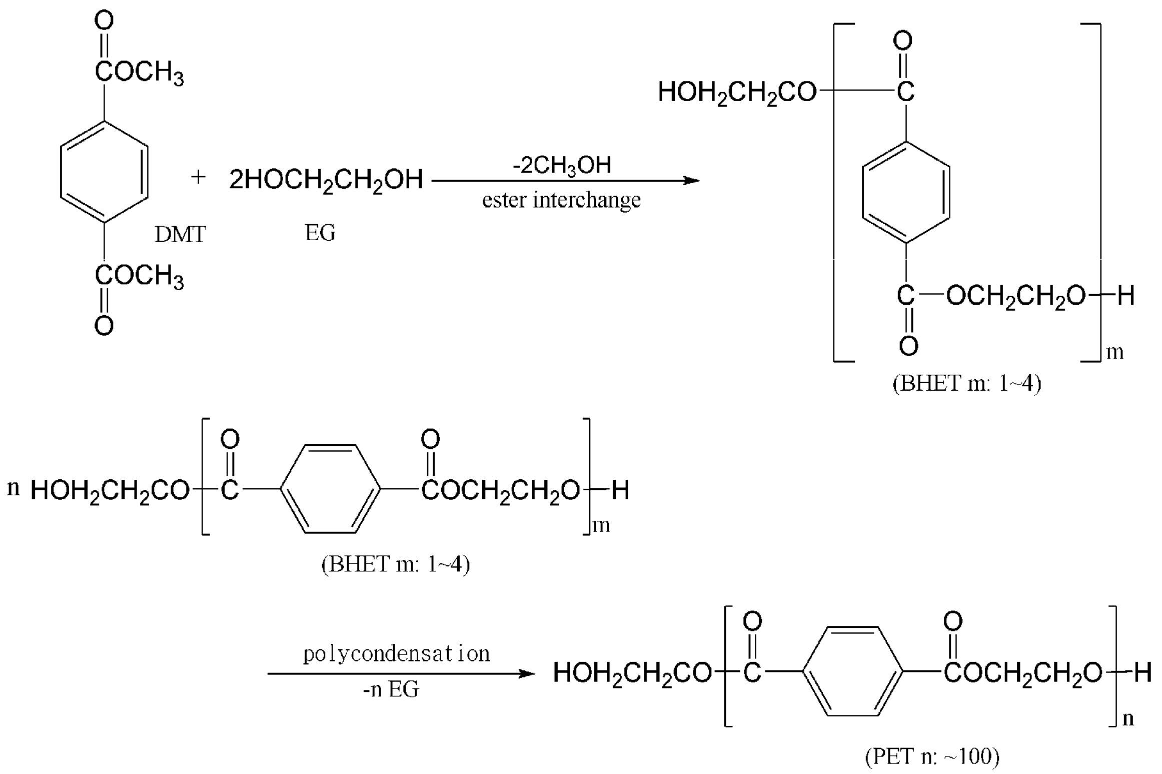


Since the DMT reaction consists of two steps of conducting the transesterification of the dialkylester compound of dicarboxylic acid and then conducting a polycondensation, high temperature reaction needs not to be maintained in the esterification. Since a high temperature and high pressure process is not conducted, the additional production of carboxyl end groups due to a thermal decomposition may be minimized. Thus, the carboxyl end groups comprised in the raw material may be minimized, thereby remarkably reducing the carboxyl end group content of the finally prepared polyester polymer.

Therefore, as shown in the Reaction Formula 2, by conducting the transesterification of dialkyl ester of dicarboxylic acid and glycol and then conducting a polycondensation, the carboxyl end group content may be minimized and the molecular weight of the polymer may be increased.

In the step of a'), the transesterification of dialkylester of dicarboxylic acid and glycol and the polycondensation may be conducted by any known DMT method, and the process condition is not specifically limited.

However, to secure the properties of the polyester fiber suitable for airbag fabric, the mole ratio of the dialkyl ester compound of dicarboxylic acid and glycol in the step a') may be 1:1.8 to 1:3.0, preferably 1:1.9 to 1:2.5. If the mole ratio of the dialkyl ester compound of dicarboxylic acid and glycol is less than 1:1.8, the carboxyl end group (CEG) content of the polyester fiber may not be effectively decreased, and thus the properties of the yarn may be deteriorated. To the contrary, if the mole ratio is greater than 1:3.0, the diethylene glycol (DEG) value of the polyester fiber may be increased, and thus it may be difficult to strongly manifest yarn before aging than the properties after aging, and the shrinkage of the yarn may be increased.

The transesterification of the step a') may be conducted in the presence of a catalyst consisting of at least one metal selected from the group consisting of Zn, Mn, Mg, Pb, Ca, and Co, or a salt thereof. The catalyst may be added in the content of 0.002 to 0.1 wt%, preferably 0.002 to 0.05 wt% based on dialkylester of dicarboxylic acid. As the catalyst ingredient in the transesterification, any catalyst known to be usable in the transesterification for preparing polyester may be used, without specific limitations.

The transesterification of the step a') may be conducted at 160 to 230 °C, preferably 190 to 230 °C . The reaction time of the transesterification may be 1 hour to 5 hours, preferably 2 to 4 hours. The reaction time and reaction temperature may be controlled in aspects of improving the properties and the productivity of the polymer.

Through the transesterification, oligomer may be produced wherein a dialkyl group of dialkylester of dicarboxylic acid is substituted with at least one selected from a C2-C8 alkane hydroxyl group, a C6-C24 aliphatic hydroxyl group, and a C6-C24 aromatic hydroxyl group, which are derived from glycol. The oligomer may have polymerization degree

of 10 or less.

And, the polycondensation of the step b') may be conducted in the presence of a catalyst consisting of at least one metal selected from the group consisting of Sb, Ti, Ge, Zn, and Sn, or a salt thereof. The catalyst may be added in the content of 0.003 to 0.1 wt%, preferably 0.003 to 0.05 wt%, based on the dialkylester of dicarboyxlic acid. As the catalyst ingredient and content in the polycondensation, any catalyst known to be usable in the polycondensation for preparing polyester may be used, without specific limitations.

The polycondensation of the step b') may be conducted with additionally adding a phosphoric acid or phosphrous acid type heat stabilizer. The heat stabilizer may be added in the content of 0.003 to 0.1 wt%, preferably 0.003 to 0.05 wt% based on the dialkylester of dicarboxylic acid. As specific heat stabilizer ingredient and content in the polycondensation, any heat stabilizer known to be usable in the polycondensation for preparing polyester may be used without specific limitations.

The polycondensation of the step b') may be conducted at a temperature of 240 to 300 °C, preferably 270 to 290 °C, under pressure of 0.1 to 500 Torr, preferably 0.2 to 500 Torr. The reaction time may be 2 to 5 hours, preferably 2 to 3 hours, and the reaction time and the reaction temperature may be controlled considering the properties of the polymer and productivity improvement.

However, according to one preferred embodiment of the invention, for polycondensation production process efficiency, polyester may be prepared by sequentially conducting the b') polycondensation at 240 to 300 °C, under low vacuum of 50 to 500 Torr, and under high vacuum of 0.1 to 10 Torr, thus producing a polymer compound.

Meanwhile, if an transesterification catalyst and a heat stabilizer are respectively used in the transesterification of the step a') and the polycondensation of the step b'), the content ratio of the transesterification catalyst and the heat stabilizer (transesterification catalyst/heat stabilizer, for example, Mn/P) may be 2.0 or less, preferably 0.8 to 1.5. If the content ratio is higher than 2.0, thermal decomposition may be promoted during the solid state polymerization, and thus, normal properties may not be obtained by spinning, and it may be preferable to control to 2.0 or less.

After the polycondensation of the step b'), the solid state polymerization of the produced polyester chip in the step c') is conducted. The solid state polymerization of the step c') may be conducted at the temperature of 220 °C or more, or 220 to 260 °C, preferably 230 to 250 °C, under the pressure of 0 to 10 Torr, preferably 1.0 Torr or less. The reaction time may be 10 to 40 hours, preferably within 30 hours, and the reaction time and the reaction temperature may be controlled considering the final viscosity and spinning performance improvement.

The polyester chip passed the solid state polymerization of the step c') may have intrinsic viscosity of 0.7 to 1.3 dl/g, preferably 0.85 to 1.2 dl/g, as explained in the TPA process.

Meanwhile, according to another preferred embodiment of the invention, the transesterification of the dkalkylester compound of dicarboxylic acid with glycol is conducted at 160 to 230 °C for about 2 to 4 hours, the polycondensation is conducted under vacuum at 240 to 300 °C for about 2 to 3 hours, to prepare into a raw chip with intrinsic viscosity of about 0.3 to 0.8, which is then subjected to the solid state polymerization at 225 to 260 °C under vacuum so as to have intrinsic viscosity of 0.7 to 1.3 and moisture content of 30 ppm or less.

The manufacturing method of the polyester fiber for an airbag of the present invention comprises melt-spinning the above produced polyester polymer and drawing. Hereinafter, the aspects of the melt-spinning and drawing processes of the present invention are briefly explained by referring annexed figures so that it may easily be carried out by a person with ordinary skill in the related art.

Fig. 2 is a schematic drawing showing a process of preparing a polyester fiber including the melt-spinning and drawing steps according to one embodiment of the present invention. As shown in Fig. 2, the method of preparing the polyester fiber for airbag of the present invention includes the steps of melting the polyester polymer disclosed above, spinning the molten polymer through a spinning die, cooling the spun fiber with quenching-air, providing the undrawn fiber with a spinning oil by using an oil-roll (or oil-jet) **120,** and dispersing the oil that is provided to the undrawn fiber uniformly on the surface of the fiber with uniform air pressure by using a pre-interlacer **130.** After this, the present fiber may be prepared by drawing the undrawn fiber through multi-step drawing devices **141-146,** intermingling the fiber at a second interlacer 150 with uniform pressure, and winding the fiber with a winder **160.**

According to the method of the present invention, the polyester undrawn yarn may be prepared by melt-spinning the high viscosity polymer comprising poly(ethylene terephthalate) prepared through the process as described above.

The melt-spinning process may be carried out at a low temperature range to minimize the thermal degradation of the polyester polymer and maximally inhibit orientation increase, which is preferable to obtain the polyester undrawn yarn satisfying the high crystallinity and high elongation range. Particularly, the spinning process may be carried out at a low temperature range, for example 270 to 300 °C, preferably 275 to 298 °C, and more preferably 280 to 295 °C . It is preferable to minimize the deterioration of the properties such as the intrinsic viscosity and the CEG content of the polyester polymer having high viscosity according to the process, that is, to maintain the high viscosity and low CEG content of the polyester polymer. When the melt-spinning process is carried out at a temperature of more than 300 °C, much thermal degradation of the polyester polymer may be caused and a decrease in the intrinsic viscosity, an increase in the CEG content, an elongation decrease and a modulus increase due to the orientation increase in the molecule

may be enlarged. That is, the deterioration of the overall properties may be caused by damage in the surface of the fiber, and thus it is undesirable. Furthermore, it is undesirable that the melt-spinning process is carried out at the temperature below 270 °C because the melting of the polyester polymer may be difficult and the spinnability may be decreased due to the N/Z surface cooling. Therefore, it is preferable that the melt-spinning process is carried out in said temperature range.

As results of experiments, it is revealed that the high strength and high elongation fiber can be obtained by carrying out the melt-spinning process of the polyester fiber in such a low temperature range. Particularly, the melt-spinning process in such a low temperature range is preferable to minimize the degradation reaction of the polyester polymer, maintain the high intrinsic viscosity of the polyester polymer. Furthermore, the polyester fiber satisfying the properties disclosed above can be obtained because it is possible to reduce the orientation of the amorphous region in the molecule effectively by carrying out the melt-spinning process in such a low temperature range.

Furthermore, the speed of the melt-spinning process of the polyester polymer may be controlled to be a low speed, for example 300 m/min to 1000 m/min, and preferably 350 m/min to 700 m/min. It is preferable to carry out the process under a lower spinning tension, that is, to minimize the spinning tension, by minimizing the degradation reaction of the polyester polymer. The degradation reaction of the polyester polymer can be minimized by selectively carrying out the melt-spinning process of the polyester polymer with the low spinning tension and the low spinning speed.

Meanwhile, the melt-spinning process to prepare the undrawn yarn may be carried out by using a polyester polymer comprising 70 mol%, preferably 90 mol% or more of poly(ethylene terephthalate). The polyester polymer may have the intrinsic viscosity of 0.8 dl/g or more, for example 0.8 dl/g to 1.5 dl/g, preferably of 0.85 dl/g or more, for example 0.85 dl/g to 1.3 dl/g, and more preferably of 0.9 dl/g or more, for example 0.90 dl/g to 1.10 dl/g. The content of the CEG in the molecules of the polyester polymer may be 50 meq/kg or less, preferably 40 meq/kg or less, and more preferably 30 meq/kg or less.

As explained above, to prepare polyester fiber having the high strength and high elongation, it is preferable to use high viscosity PET polymer, for example PET polymer having intrinsic viscosity of 0.8 dl/g or more in the manufacturing process of undrawn yarn, so as to effectively reduce modulus while maintaining the highest viscosity range through melt-spinning and drawing processes. However, to prevent molecular chain cutting due to melting temperature increase of the PET polymer and pressure increase due to discharge amount from a spin pack, the intrinsic viscosity may be preferably 1.5 dl/g or less.

Meanwhile, in order that the prepared polyester fiber may maintain excellent properties even under high temperature and high moisture conditions when applied for airbag fabric, CEG content in the PET polymer molecule may be preferably 50 meq/kg or less. The CEG content of the PET polymer may be preferably maintained within the lowest range even after progressing melt-spinning and drawing processes, so that the finally prepared polyester fiber may secure high strength and excellent dimensional stability, mechanical properties, and excellent property manifesting property even under sever conditions. In this regard, if the CEG content of the PET chip exceeds 50 meq/kg, the CEG content in the molecule of polyester fiber finally prepared through melt-spinning and drawing processes may be excessively increased, for example exceeding about 30 meq/kg, excessive acid may be generated under high moisture conditions, thus inducing basic molecular chain cutting of the polyester fiber, to cause property deterioration of the yarn itself and fabric manufactured therefrom.

Particularly, the polyester polymer having high intrinsic viscosity and a low CEG content can minimize the difference in the intrinsic viscosity and the CEG content between the polyester polymer and the polyester fiber, by carrying out the melt-spinning process at the low temperature and the low speed, and by maximally suppressing the thermal degradation as described above. For example, the melt-spinning and the succeeding processes may be carried out so that the difference between the intrinsic viscosity of the polyester polymer and the intrinsic viscosity of the polyester fiber becomes 0.5 dl/g or less, or 0 to 0.5 dl/g, and preferably 0.4 dl/g or less, or 0.1 to 0.4 dl/g. Furthermore, the processes may be carried out so that the difference between the CEG content of the polyester polymer and the CEG content of the polyester fiber is 30 meq/kg or less, or 0 to 30 meq/kg, and preferably 15 meq/kg or less, or 3 to 15 meq/kg.

The present invention can maintain superior mechanical properties of the polyester fiber and secure good elongation of the polyester fiber at the same time, by maximally suppressing the intrinsic viscosity decrease and the CEG content increase of the polyester polymer, and can prepare the high strength and low modulus fiber that is suitable for the fabric for an airbag.

The polyester polymer, for example the PET chip, may be preferably spun through the die to make the fineness of the monofilament in the range of 0.5 to 20 denier, and preferably 1 to 15 denier. That is, it is preferable that the fineness of the monofilament is 1.5 denier or more in order to lower the fiber scission during the spinning process and the possibility of the fiber scission due to the interference between the fibers during the cooling process. It is also preferable that the fineness of the monofilament is 15 denier or less in order to increase the cooling efficiency.

The polyester undrawn yarn may be prepared by further adding a cooling process after melt-spinning the polyester polymer. The cooling process is preferably carried out by applying cooling air of 15 to 60 °C . It is also preferable to control the flow rate of the cooling air to 0.4 to 1.5 m/s according to the temperature of the cooling air. Thus, the

polyester undrawn yarn showing all the properties of the present embodiment can be easily prepared.

Meanwhile, after preparing the polyester undrawn yarn through the above spinning step, the drawn yarn is prepared by drawing the undrawn yarn. The drawing process can be carried out with a drawing ratio of 5.0 to 6.0, and preferably 5.2 to 5.8. Through the optimized melt-spinning process, the polyester undrawn yarn maintains its high intrinsic viscosity and low amorphous orientation factor, and the CEG content in the molecules of the polyester undrawn yarn is also minimized. Therefore, when the drawing process is carried out with the drawing ratio of more than 6.0, it may be an excess drawing level to generate the scission or hairiness of the fiber, and thus the polyester drawn yarn prepared by the above process may not exhibit the preferable properties as described above. Particularly, if the elongation of the fiber decreases and the modulus of the fiber increases by such a high drawing ratio condition, the folding property and the packing property may not be good when the fiber is applied to the fabric for an airbag. On the other hand, if the drawing process is carried out with a relatively low drawing ratio, the tenacity of the prepared polyester fiber may be partially decreased because the degree of orientation of the fiber is low. However, in the aspect of securing the superior properties, if the drawing process is carried out at the drawing ratio of 5.0 or more, the polyester fiber having high strength and low modulus suitable for the fabric for an airbag can be prepared. Therefore, it is preferable that the drawing process is carried out with the drawing ratio of 5.0 to 6.0.

According to another proper embodiment of the present invention, the method of preparing the polyester fiber may include the processes of drawing, heat-setting, relaxing, and winding through multi-step godet rollers from the melt-spinning process of the high viscosity polyester polymer chip to the winding process by the winder, in order to prepare the polyester fiber having a having the high strength and high elongation, for satisfying the properties of high tenacity and low shrinkage at the same time by a direct spinning and drawing process.

The drawing process can be carried out after passing the undrawn yarn through the godet rollers with an oil pick-up unit at 0.2% to 2.0%.

The relaxing ratio in the relaxing process may be preferably 1.0% to 14%. When the relaxing ratio is below 1.0%, it may be difficult to exhibit the shrinkage and it is also difficult to prepare the fiber having high elongation because of the high degree of orientation of the fiber. On the other hand, when the ratio is more than 14%, it may be impossible to secure the workability because the trembling of the fiber on the godet rollers becomes severe.

Furthermore, the drawing process may further include the heat-setting process that heat-treats the undrawn yarn at the temperature of about 170 °C to 250 °C . It is possible to heat-treat the fiber at a temperature of preferably 175 °C to 240°C and more preferably 180 °C to 235 °C for the adequate progress of the drawing process. When the temperature of the heat-setting process is below 170 °C, it may be difficult to obtain the shrinkage because the thermal effect is not sufficient and the relaxing efficiency falls. On the other hand, when the temperature is more than 250 °C, the workability may be deteriorated because the fiber tenacity deteriorates and the generation of tar on the roller is increased

At this time, the winding speed may be 2,000 to 4,000 m/min, and preferably 2,500 to 3,700 m/min.

According to still another embodiment of the present invention, the fabric for an airbag including the polyester fiber disclosed above is provided.

In the present invention, the fabric for an airbag means a woven fabric or a nonwoven fabric for preparing an airbag for a car. The fabric for an airbag of the present invention is characterized by being prepared from the polyester fiber that is prepared through above processes.

Particularly, the present invention can provide a polyester fabric for an airbag that has superior dimensional stability and air-tightness, and superior folding properties, flexibility, and packing properties, as well as superior energy absorbing ability when the airbag expands, by using the polyester fiber having high tenacity-high elongation instead of the prior polyester fiber having high tenacity-low elongation. Furthermore, the fabric for an airbag is not only superior in properties at room temperature but also maintains the superior mechanical properties and air-tightness even after aging in the severe conditions of high temperature and high humidity.

More particularly, the tensile tenacity of the fabric for an airbag of the present invention that is measured at room temperature according to the American Society for Testing and Materials Standards ASTM D 5034 method may be 220 kgf/inch to 350 kgf/inch, and preferably 230 kgf/inch to 300 kgf/inch. It is preferable that the tensile tenacity is 220 kgf/inch or more in the aspect of securing excellent durability when the airbag is operated. It is also preferable that the tensile tenacity is 350 kgf/inch or less in the aspect of practical property exhibition.

The elongation at break of the fabric for an airbag that is measured according to the ASTM D 5034 method at room temperature may be 20% to 60%, and preferably 30% to 50%. It is preferable that the elongation at break is 20% or more in the aspect of securing excellent mechanical properties when the airbag is operated. It is also preferable that the elongation at break is 60% or less in the aspect of practical property exhibition.

Furthermore, because the fabric expands rapidly by the gas of a high temperature and high pressure, superior tearing strength is required of the coated fabric for an airbag. Therefore, the tearing strength that represents the burst strength of the coated fabric for an airbag may be 23 kgf to 60 kgf, and preferably 25 kgf to 55 kgf when it is measured according to the ASTM D 2261 method at room temperature. If the tearing strength of the coated fabric is below the

lowest limit, that is, below 23 kgf, at room temperature, the airbag may burst during the expansion thereof and it may cause a huge danger in function of the airbag.

The shrinkage rates in the directions of warp and weft of the fabric for an airbag according to the present invention that are measured according to ASTM D 1776 method may be 1.0% or less, and preferably 0.8% or less, respectively. Also, the shrinkage rates in the directions of warp and weft of the fabric after conducting the aging may be 1.0% or less, and preferably 0.8% or less, respectively. It is most preferable that the shrinkage rates in the directions of warp and weft do not exceed 1.0%, in the aspect of securing the superior dimensional stability of the fabric.

The air permeability of the fabric that is measured according to ASTM D 737 method at room temperature may be 10 cfm or less, for example, 0 to 10 cfm. Also, the air permeability of the fabric after conducting the aging may be 10 cfm or less, for example, 0 to 10 cfm. Particularly, the air permeability of the fabric for an airbag can be apparently lowered by forming a coating layer of a rubber material on the fabric, which is possible to lower the air permeability to near 0 cfm. However, unless the rubber material is coated thereon, the air permeability of the non-coated fabric of the present invention that is measured according to the ASTM D 737 method at room temperature may be 10.0 cfm or less, for example, 0.5 to 10.0 cfm, preferably 1.5 cfm or less, for example, 0.5 to 1.5 cfm. Also, the air permeability of the non-coated fabric after conducting the aging may be 10.0 cfm or less, for example, 0.5 to 10.0 cfm, preferably 1.5 cfm or less, for example, 0.5 to 1.5 cfm. If the air permeability is over 10.0 cfm, and preferably over 3.5 cfm, it may be undesirable in the aspect of maintaining the air-tightness of the fabric for an airbag.

Furthermore, the stiffness of the fabric for an airbag according to the present invention that is measured according to the ASTM D 4032 method at room temperature may be 0.2 kgf 1.2 kgf, and preferably 0.5 kgf to 1.0 kgf. Also, the stiffness of the fabric after conducting the aging may be 0.2 kgf 1.2 kgf, and preferably 0.5 kgf to 1.0 kgf. Particularly, the stiffness may be 1.2 kgf or less when the total fineness of the fiber is 530 denier or more, and the stiffness may be 0.8 kgf or less when the total fineness of the fiber is 460 denier or less.

The fabric of the present invention is preferable to maintain said range of stiffness in order to effectively use it for an airbag. If the stiffness is too low such as below 0.2 kgf, it may not function as a sufficient protecting support when the airbag is expanded, and the packing property may also be deteriorated when it is installed in a car because its dimensional stability deteriorates. Furthermore, the stiffness may preferably be 1.2 kgf or less, in order to prevent the fabric from becoming rigid and hard to fold and the packing property being deteriorated, and the fabric from being discolored. Particularly, the stiffness of the fabric for an airbag may be 0.8 kgf or less in the case of being 460 denier or less of total fineness, and 1.2 kgf or less in the case of being 530 denier or more of total fineness.

Furthermore, according to still another embodiment of the present invention, a method of preparing a fabric for an airbag by using the polyester fiber is provided. The present method of preparing the fabric for an airbag includes the steps of weaving a raw fabric for an airbag from the polyester fibers, scouring the woven raw fabric for an airbag, and tentering the scoured fabric.

In the present invention, the polyester fiber can be prepared into the final fabric for an airbag through a conventional weaving method and scouring and tentering processes. The weaving of the fabric is not limited to a particular type, and both weaving types of a plain type and a one piece woven (OPW) type are preferable.

Particularly, the fabric for an airbag of the present invention may be prepared through the processes of beaming, weaving, scouring, and tentering by using the polyester fiber as the warp and the weft. The fabric may be prepared by using a conventional weaving machine, but it is not limited to any particular weaving machine. However, plain fabrics may be prepared by using a Rapier Loom, a Water Jet Loom, and the like, and OPW type fabrics may be prepared by a Jacquard Loom.

Furthermore, it is preferable that the fabric for an airbag of the present invention further includes a coating layer that is coated or laminated on the surface with at least one selected from the group consisting of silicone resin, polyvinylchloride resin, polyethylene resin, polyurethane resin, and the like, but the kind of coating resin is not limited to the materials mentioned above. The resin coated layer may be formed by a knife-over-roll coating method, a doctor blade method, or a spray coating method, but it is not limited to the methods mentioned above.

The amount of the coated resin per unit area of the coating layer may be 20 to 200 $g/m^2$, and preferably 20 to 100 $g/m^2$. Particularly, the amount of the coated resin is preferably 30 $g/m^2$ to 95 $g/m^2$ in the case of the OPW type fabric for a side curtain airbag, and preferably 20 $g/m^2$ to 50 $g/m^2$ in the case of the plain type fabric for an airbag.

The coated fabric for an airbag may be prepared into a form of an airbag cushion having a certain shape through the processes of tailoring and sewing. The airbag is not limited to any particular shape, and can be prepared in a general form.

Meanwhile, according to still another embodiment of the present invention, an airbag system including said airbag is provided. The airbag system may be equipped with a common device that is well known to the related manufacturers. The airbag may be largely classified as a frontal airbag and a side curtain airbag. As the frontal airbag, there are various airbags for a driver's seat, for a passenger seat, for protecting the side, for protecting knees, for protecting ankles, for protecting a pedestrian, and the like, and the side curtain airbag protects the passenger from a broadside collision and a rollover of a car. Therefore, the airbag of the present invention includes both the frontal airbag and the

side curtain airbag.

According to the present invention, there are provided polyester fiber having a highly amorphous structure and optimum orientation property, and fabric for an airbag obtained using the same.

Particularly, since the polyester fiber for an airbag is optimized to have a high strength and high elongation, when it is used for preparing the fabric for an airbag, it is possible to minimize heat shrinkage at high temperature heat treatment and to obtain superior dimensional stability, mechanical properties, and gas barrier effect. It is also possible to remarkably improve the packing properties by securing superior folding properties and flexibility, and to protect the occupant safely by minimizing the impact applied to the occupant.

Therefore, the polyester fiber and the polyester fabric of the present invention can be very preferably used for preparing an airbag for a car.

## Examples

Hereinafter, preferable examples and comparative examples are presented for understanding the present invention. However, the following examples are only for illustrating the present invention and the present invention is not limited to or by them.

### Examples 1-5

The esterification reactions of terephthalic acid and ethylene glycol were carried out at a temperature range of 250-290 °C for 4 hours with a mole ratio (ethylene glycol/terephthalic acid) of 1.2. After the esterification reactions, polycondensation reactions of the prepared oligomers were carried out in a temperature range of 250-290 °C for 3 hours 30 minutes so as to prepare polymers.

The polycondensation reactions were carried out by controlling the reaction temperature and time so that the intrinsic viscosity (IV) of the melt-polymerized polyester polymers (chips) prepared through the polycondensation reactions became about 0.4-0.6 dl/g.

To increase the specific surface area of a polyester chip prepared by the polycondensation, it was cut to a size of 2.0 g/100ea. Then, a solid state polymerization reaction (SSP) were carried out at the temperature range of 220-245 °C by using the polyester polymer chips prepared by the polycondensation reactions and the additional reactions so as to prepare the SSP polyester chips having the intrinsic viscosity of 0.9-1.25 dl/g.

The PET polymer, namely, the SSP polyester chips were prepared into the polyester fiber for an airbag through the steps of melt-spinning and drawing under the conditions as described in the following Table 1.

Particularly, the SSP polyester chips were carried out the melt-spinning and cooling to prepare a polyester undrawn yarn, which was then drawn at a specific drawing ratio and heat treated to prepare polyester fiber. At this time, the intrinsic viscosity and CEG content in the molecule of PET polymer, spinning temperature of the melt-spinning process, drawing ratio, and heat treatment temperature were as described in the following Table 1, and the remaining conditions followed common conditions for preparing polyester fiber.

**[Table 1]**

| | Example 1 | Example 2 | Example 3 | Example 4 | Example 5 |
|---|---|---|---|---|---|
| PET content (mol%) | 100 | 100 | 100 | 100 | 100 |
| Intrinsic viscosity of chip (dl/g) | 0.90 | 0.95 | 1.05 | 1.15 | 1.25 |
| CEG of chip (meq/kg) | 25 | 23 | 18 | 16 | 14 |
| Spinning temperature (°C) | 283 | 290 | 293 | 295 | 295 |
| Drawing ratio | 5.7 | 5.6 | 5.5 | 5.4 | 5.3 |
| Heat treatment temperature (°C) | 240 | 235 | 235 | 235 | 240 |

The properties of the polyester fibers prepared according to Examples 1-5 were measured according to the following methods, and the measured properties are listed in the following Table 2.

1) Crystallinity

The density ρ of the polyester fiber was measured by a density gradient method using n-heptane and carbon tetrachloride at 25 °C, and the crystallinity was calculated according to the following Calculation Formula 1.

[Calculation Formula 1]

$$X_c(Crystallinity) = \frac{\rho_c(\rho - \rho_a)}{\rho(\rho_c - \rho_a)}$$

Herein, $\rho$ is the density of the fiber, $\rho_c$ is the density of the crystal region ($\rho_c$ = 1.457 g/cm$^3$ in the case of PET), and $\rho_a$ is the density of the amorphous region ($\rho_a$ = 1.336 g/cm$^3$ in the case of PET).

2) Intrinsic Viscosity (IV)

After extracting the spinning oil from the fiber sample with carbon tetrachloride and dissolving the fiber sample in ortho-chlorophenol (OCP) at 160±2°C, the viscosity of the fiber sample in a capillary was measured by using an automatic viscometer (Skyvis-4000) at a temperature of 25°C, and the intrinsic viscosity (IV) of the fiber was calculated according to the following Calculation Formula 2.

[Calculation Formula 2]

Intrinsic Viscosity (IV) = {(0.0242×Rel) + 0.2634} × F

Rel = (seconds of solution × specific gravity of solution × viscosity coefficient) / (OCP viscosity)

F= (IV of the standard chip) / (average of three IV measured from the standard chip with standard action)

3) CEG content

The CEG content of the polyester fiber was measured according to ASTM D 664 and D 4094 methods. A fiber sample of 0.2 g was introduced into a 50 mL Erlenmeyer flask and 20 mL of benzyl alcohol was introduced therein, the flask was heated to 180 °C by using a hot plate, and the temperature was maintained for 5 minutes so as to dissolve the sample completely. Then, the solution was cooled to 160 °C and 5-6 drops of phenol phthalene were added therein when the temperature reached 135 °C, and the CEG content (COOH million equiv./ kg of sample) was calculated from Calculation Formula 3 at the titration point where the colorless solution becomes pink by titrating the solution with 0.02 N KOH.

[Calculation Formula 3]

CEG = (A-B)×20×1/W

Herein, A is the amount (mL) of KOH that is spent in the titration for the fiber sample, B is the amount (mL) of KOH that is spent in the titration for the vacant sample, and W is the weight (kg) of the fiber sample.

4) Amorphous orientation factor (AOF) and birefringence

The AOF of the polyester fiber was calculated by the following Calculation Formula 4 based on the properties of birefringence measured with a polarization microscope and crystal orientation factor (COF) measured by XRD.

[Calculation Formula 4]

$$\mathrm{AOF} = \frac{(Birefreingence - Crystallinity\ (\%) \times 0.01 \times Crystal\ Orientation\ Factor\ (\mathrm{COF}) \times 0.275)}{((1 - Crystallinity\ (\%) \times 0.01) \times 0.22)}$$

5) Long period

The Long period of the polyester fiber was measured as the sum of the length of crystalline region and the length of amorphous region by using Small-Angle X-ray Scattering.

6) Tensile Tenacity and Elongation at Break

The tensile tenacity and elongation at break were measured by using a universal testing machine (Instron Co.), and the length of the fiber sample was 250 mm, the tensile speed was 300 mm/min, and the initial load was 0.05 g/d.

7) Dry Heat Shrinkage Rate

The dry heat shrinkage rate was measured for 2 minutes at a temperature of 180 °C with initial tension of 30 g by using a Testrite MK-V device (Testrite Co., England).

8) Toughness

The toughness ($10^{-1}$ g/d) was calculated by the following Calculation Formula 5.

[Calculation Formula 5]

$$\text{Toughness} = \text{Strenegth(g/d)} \times \sqrt{\text{Elongation at Break(\%)}}$$

9) Denier of Monofilament

The denier of monofilament was measured according to the method of picking the fiber of 90 m by using a reel, weighing the fiber to obtain the total fineness (denier) of the fiber, and dividing the total fineness by the number of filaments.

**[Table 2]**

| | Example 1 | Example 2 | Example 3 | Example 4 | Example 5 |
|---|---|---|---|---|---|
| Crystallinity (%) | 50.4 | 46.2 | 44.5 | 43.2 | 43.1 |
| Birefringence | 0.163 | 0.1594 | 0.1502 | 0.150 | 0.1479 |
| Crystalline region orientation factor (COF, Fc) | 0.9342 | 0.9264 | 0.9238 | 0.9087 | 0.9312 |
| Amorphous region orientation factor (AOF,Fa) | 0.758 | 0.644 | 0.581 | 0.487 | 0.303 |
| Long period Å) | 165.1 | 162.2 | 154.8 | 152.6 | 161.6 |
| Intrinsic viscosity (dl/g) | 0.85 | 0.88 | 0.92 | 0.97 | 1.01 |
| CEG (meq/kg) | 29 | 27 | 25 | 24 | 22 |

(continued)

| | Example 1 | Example 2 | Example 3 | Example 4 | Example 5 |
|---|---|---|---|---|---|
| Tensile strength (g/d) | 7.5 | 7.8 | 8.0 | 8.2 | 8.4 |
| Elongation at break (%) | 14 | 16 | 17 | 18 | 19 |
| Dry heat shrinkage (%) | 6.3 | 5.9 | 4.8 | 3.8 | 2.6 |
| Toughness ($\times$ $10^{-1}$g/d) | 28.1 | 31.2 | 33 | 34.8 | 36.6 |
| Single yarn fineness (de) | 7.7 | 7.7 | 8.3 | 4.2 | 4.7 |
| Total fineness (de) | 460 | 460 | 500 | 500 | 420 |
| Filament number | 60 | 60 | 60 | 20 | 120 |

Comparative Examples 1-5

The polyester fibers of Comparative Examples 1-5 were prepared substantially according to the same method as in Examples 1-5, except the conditions disclosed in the following Table 3.

**[Table 3]**

| | Comparative Example 1 | Comparative Example 2 | Comparative Example 3 | Comparative Example 4 | Comparative Example 5 |
|---|---|---|---|---|---|
| PET content (mol%) | 100 | 100 | 100 | 100 | 100 |
| Intrinsic viscosity of chip (dl/g) | 0.85 | 0.95 | 1.0 | 1.3 | 1.4 |
| CEG of chip (meq/kg) | 30 | 23 | 20 | 17 | 15 |
| Spinning temperature (°C) | 302 | 302 | 305 | 307 | 310 |
| Drawing ratio | 6.05 | 6.0 | 5.95 | 5.9 | 5.85 |
| Heat treatment temperature (°C) | 220 | 220 | 220 | 210 | 210 |

The properties of the polyester fibers prepared according to Comparative Examples 1-5 were measured substantially according to the same method as in Examples 1-5, and the measured properties are listed in the following Table 4.

**[Table 4]**

| | Comparative Example 1 | Comparative Example 2 | Comparative Example 3 | Comparative Example 4 | Comparative Example 5 |
|---|---|---|---|---|---|
| Crystallinity (%) | 42.9 | 42.7 | 42.6 | 42.3 | 42.0 |
| Birefringence | 0.2094 | 0.2002 | 0.1979 | 0.2168 | 0.213 3 |
| Crystalline region orientation factor (COF, Fc) | 0.9228 | 0.9123 | 0.9085 | 0.9113 | 0.9125 |

(continued)

| | Comparative Example 1 | Comparative Example 2 | Comparative Example 3 | Comparative Example 4 | Comparative Example 5 |
|---|---|---|---|---|---|
| Amorphous region orientation factor (AOF, Fa) | 0.804 | 0.848 | 0.883 | 0.912 | 0.923 |
| Long period Å) | 193 | 187 | 182 | 200 | 198 |
| Intrinsic viscosity (dl/g) | 0.60 | 0.65 | 0.70 | 0.85 | 0.88 |
| CEG (meq/kg) | 55 5 | 53 | 50 | 47 | 44 |
| Tesile strength (g/d) | 7.5 | 7.7 | 7.9 | 8.0 | 8.3 |
| Elongation at break (%) | 10 | 11 | 12 | 12 | 12 |
| Dry heat shrinkage (%) | 8.5 | 8.8 8 | 8.9 | 9.2 | 9.5 5 |
| Toughness (×10-1g/d) | 24.9 | 26.7 | 27.4 | 28.8 | 29.9 |
| Single yarn fineness (de) | 1.25 | 6.0 | 6.0 | 3.0 | 3.3 |
| Total fineness (de) | 200 | 240 | 600 | 700 | 800 |
| Filament number | 160 | 40 | 50 | 230 | 240 |

Preparation Examples 1-5 5

Raw fabrics for an airbag was woven from the polyester fibers prepared according to Examples 1-5 by using a Rapier Loom, and were prepared into fabrics for an airbag through the scouring and tentering processes. Then, a polyvinylchloride (PVC) resin was coated on the fabrics with a knife-over-roll coating method to obtain PVC coated fabrics.

At this time, the weaving density of warps and wefts, the weaving type, and the amount of coating resin of the fabrics were as disclosed in the following Table 5, and the other conditions for Preparation Examples 1-5 followed conventional conditions for preparing a polyester fabric for an airbag.

**[Table 5]**

| | | Preparation Example 1 | Preparation Example 2 | Preparation Example 3 | Preparation Example 4 | Preparation Example 5 |
|---|---|---|---|---|---|---|
| Weaving density (warp×weft) | Warp (ea/inch) | 53 | 53 | 53 | 49 | 49 |
| | Weft (ea/inch) | 53 | 53 | 53 | 49 | 49 |
| Weaving type | | Plain | Plain | Plain | Plain | Plain |
| Amount of coating resin ($g/m^2$) | | 25 | 25 | 25 | 30 | 30 |

The properties of the polyester fabrics for an airbag prepared by using the polyester fibers of Examples 1-5 were measured by the following methods, and the measured properties are listed in the following Table 6.

(a) Tensile Tenacity and Elongation at Break

The fabric sample was cut from the fabric for an airbag and fixed at the lower clamp of the apparatus for measuring the tensile tenacity according to ASTM D 5034. Thereafter, while moving the upper clamp that holds the upper part of the fabric sample upwardly, the tenacity and the elongation at the time when the fabric sample was broken were measured.

(b) Tearing Strength

The tearing strength of the fabric for an airbag was measured according to ASTM D 2261.

(c) Shrinkage Rate

The shrinkage rates in the directions of warp and weft were measured according to ASTM D 1776. First, a sample was cut from the fabric for an airbag, and the sample was marked to indicate 20 cm that is the length before shrinkage in each direction of warp and weft. Then, after the sample was heat-treated at 149 °C for 1 hour, the length of the sample after shrinkage was measured. The shrinkage rates (%) in the directions of warp and weft were calculated by the equation of {[(length before shrinkage - length after shrinkage)/ (length before shrinkage)] x 100}.

(d) Stiffness

The stiffness of the fabric was measured with a circular bend method by using the apparatus for testing the stiffness according to ASTM D 4032. Furthermore, it is also possible to use a cantilever method for measuring the stiffness of the fabric, which is performed by measuring the bending length of the fabric with a cantilever measuring device having a slope of a certain angle for bending the fabric.

(e) Thickness

The thickness of the fabric for an airbag was measured according to ASTM D 1777.

(f) Air Permeability

According to ASTM D 737, after storing the fabric for an airbag at a condition of 20 °C and 65%RH for 1 day or more, pressured air of 125 Pa was applied to a circular cross-section of 38 $cm^2$ and the amount of air passed through the cross-section was measured.

**[Table 6]**

| | | Preparation Example 1 | Preparation Example 2 | Preparation Example 3 | Preparation Example 4 | Preparation Example 5 |
|---|---|---|---|---|---|---|
| Tensile tenacity (kgf/inch) | | 235 5 | 240 | 242 | 244 | 249 |
| Elongation at break (%) | | 35 | 37 | 38 8 | 40 | 41 1 |
| Tearing strength (kgf) | | 38 | 41 | 43 | 45 | 46 |
| Shrinkage rate of fabric (%) | Warp | 0.7 | 0.6 | 0.6 | 0.5 | 0.5 |
| | Weft | 0.6 | 0.4 | 0.5 | 0.4 | 0.3 |
| Stiffness (kgf) | | 0.79 | 0.75 | 0.73 | 0.65 | 0.54 |
| Air permeability (cfm) | | 1.4 | 1.4 | 1.3 | 1.3 | 1.2 |

Comparative Preparation Examples 1-5

The polyester fabrics of Comparative Preparation Examples 1-5 were prepared substantially according to the same method as in Preparation Examples 1-5, except for using the polyester fibers of Comparative Examples 1-5 under the conditions disclosed in the following Table 7.

**[Table 7]**

| | | Comparative Preparation Example 1 | Comparative Preparation Example 2 | Comparative Preparation Example 3 | Comparative Preparation Example 4 | Comparative Preparation Example 5 |
|---|---|---|---|---|---|---|
| Weaving density (warp×weft) | Warp (ea/ inch) | 53 | 53 | 54 | 49 | 49 |
| | Weft (ea/ inch) | 53 | 53 | 54 | 49 | 49 |
| Weaving type | | Plain | Plain | Plain | Plain | Plain |
| Amount of coating resin (g/m$^2$) | | 25 | 25 | 25 | 30 | 30 |

The properties of the polyester fabrics for an airbag prepared by using the polyester fibers of Comparative Examples 1-5 were measured substantially according to the same method as in Preparation Examples 1-5, and the measured properties are listed in the following Table 8.

**[Table 8]**

| | | Comparative Preparation Example 1 | Comparative Preparation Example 2 | Comparative Preparation Example 3 | Comparative Preparation Example 4 | Comparative Preparation Example 5 |
|---|---|---|---|---|---|---|
| Tensile tenacity (g/d) | | 220 | 222 | 225 | 227 | 229 |
| Elongation at break (%) | | 23 | 24 | 24 | 26 | 28 |
| Tearing strength (kgf) | | 15 | 17 | 18 8 | 20 | 21 |
| Shrinkage rate of fabric (%) | Warp | 1.2 | 1.1 | 1.1 | 0.9 | 0.8 |
| | Weft | 1.1 | 1.0 | 0.9 | 0.8 | 0.7 |
| Stiffness (kgf) | | 1.2 | 1.2 | 1.1 | 1.1 | 1.1 |
| Air permeability (cfm) | | 1.8 8 | 1.8 8 | 1.7 | 1.9 | 2.0 |

As shown in Table 6, it can be recognized that the fabrics for an airbag of Preparation Examples 1-5 that were prepared from the polyester fibers of Examples 1-5 having the optimized crystallinity and amorphous orientation factor, crystalline orientation factor, long period, and the like, and have very superior characteristics. Particularly, the fabrics for an airbag of Preparation Examples 1-5 have tearing strength of 38 to 46 kgf, tensile tenacity of 235 to 249 g/d, and shrinkage rates of 0.54 to 0.79. At the same time, it is also recognized that the polyester fabrics for an airbag of Preparation Examples 1-5 have superior folding and packing properties in addition to their superior dimensional stability and mechanical properties, due to their optimal range of stiffness of 0.79 to 0.54.

On the contrary, as shown in Table 8, it is recognized that the fabrics for an airbag of Comparative Preparation Examples 1-5 that were prepared by using the polyester fibers of Comparative Examples 1-5 do not satisfy such characteristics. Since the polyester fiber of Comparative Examples 1 to 5 have low strength, low elongation, high amorphous orientation factor, high long period, and the like, the fabrics for an airbag prepared by using them have decreased properties including tear strength, tensile strength, elongation at break, and the like. Particularly, the fabrics for an airbag of Comparative Preparation Examples 1-5 have tearing strength of 15 to 21 kgf, which is inferior to that for the fabrics of the Preparation Examples. Furthermore, it is recognized that the stiffness and air permeability for the fabrics of Comparative Preparation Examples 1-5 is largely increased. When fabrics having the increased stiffness and air permeability are applied to an airbag device, there may be some problems, for example, the air of the airbag leaks easily while expanding the airbag and the airbag does not act properly to protect a driver and passengers.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A polyester fiber for an airbag, having a crystallinity of 43% to 55%, an amorphous orientation factor (AOF) of 0.2 to 0.8, and a long period of 140 to 180 Å.

2. The polyester fiber according to Clam 1, wherein the fiber comprises 70 mol% or more of poly(ethylene terephthalate).

3. The polyester fiber according to Clam 1, wherein birefringence is 0.1 to 0.35.

4. The polyester fiber according to Clam 1, wherein intrinsic viscosity is 0.7 dl/g or more.

5. The polyester fiber according to Clam 1, wherein the yarn has carboxyl end group content of 30 meq/kg of less.

6. The polyester fiber according to Clam 1, wherein the yarn has diethyleneglycol content of 1.1 1 wt% or less.

7. The polyester fiber according to Clam 1, wherein the yarn has tensile strength of 6.5 g/d to 11 g/d, and elongation at break of 13% to 35%.

8. The polyester fiber according to Clam 1, wherein the yarn has dry heat shrinkage of 1% to 7%, and toughness value of 27×10-1 g/d to 46×10-1 g/d.

9. The polyester fiber according to Clam 1, wherein the yarn has single yarn fineness of 2 de to 10.5 de.

10. The polyester fiber according to Clam 1, wherein the yarn has total fineness of 200 to 1,000 denier.

11. The polyester fiber according to Clam 1, wherein the yarn has a filament number of 50 to 240.

12. A method for preparing the polyester fiber according to any one of Claims 1 to 11, including the steps of:

    melt-spinning a polyester polymer comprising 70 mol% of more of poly(ethylene terephthalate) and having intrinsic viscosity of 0.8 dl/g or more at 270 to 300 °C to prepare a polyester undrawn yarn; and
    drawing the polyester undrawn yarn.

13. The method according to Claim 12, further including the step of preparing the polyester polymer through the esterification of dicarboxylic acid and glycol.

14. The method according to Claim 12, further including the step of preparing the polyester polymer through the transesterification of a dialkylester compound of dicarboxylic acid with glycol.

15. The method according to Claim 12, wherein the melt-spinning process is carried out with a spinning speed of 300 m/min to 1,000 m/min.

16. The method according to Claim 12, further including a heat-setting process at a temperature of 170 to 250 °C after drawing the undrawn yarn.

17. A polyester fabric for an airbag, including the polyester fiber according to any one of Claims 1 to 11.

18. The polyester fabric according to Claim 17, further including a resin coating layer on the surface of the fabric.

19. The polyester fabric according to Claim 18, wherein the resin coating layer includes silicon resin, polyvinylchloride resin, polyethylene resin, polyurethane resin, and a mixture thereof.

20. The polyester fabric according to Claim 18, wherein the coating amount of the resin per unit area is 20 to 200 $g/m^2$.

**FIG. 1**

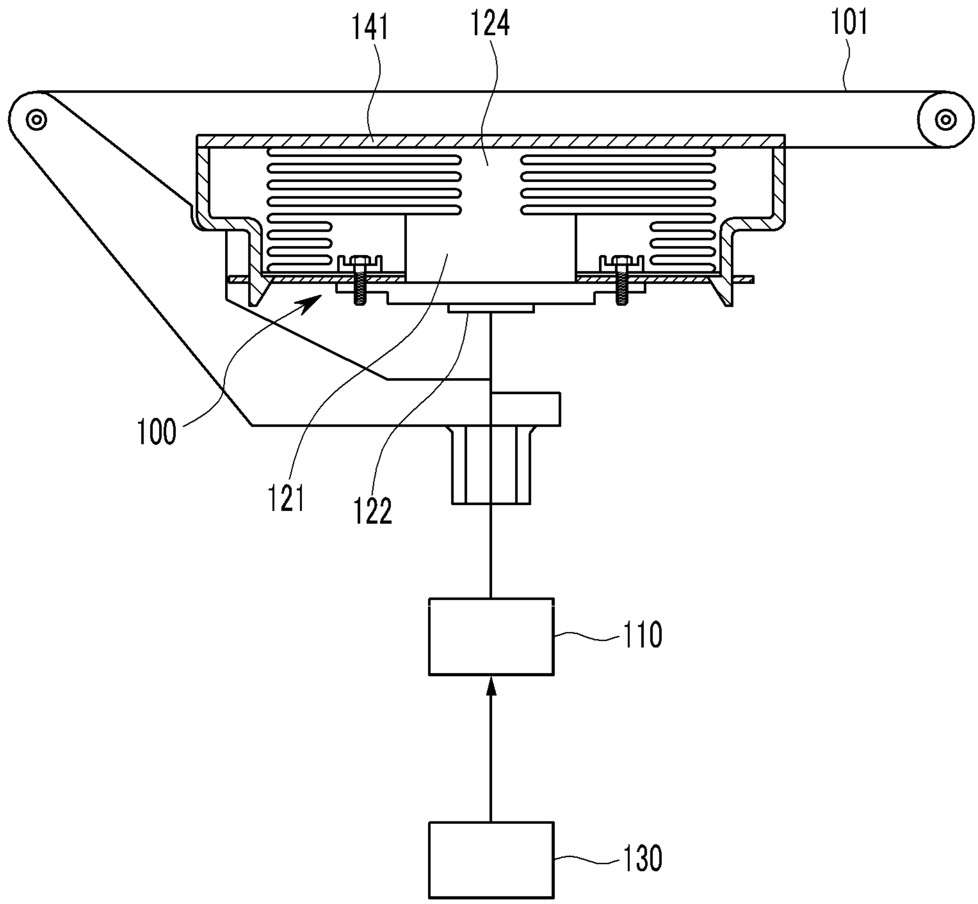

FIG. 2

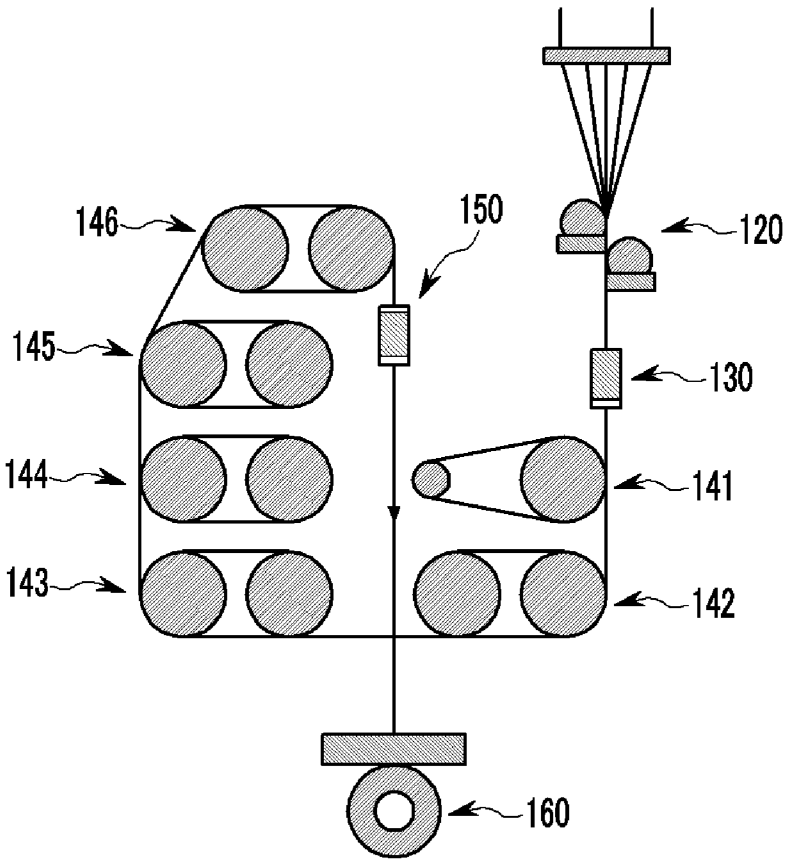

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020090052716
- KR 1020090053238
- KR 1020090054926
- JP HEI04214437 B